# EUROPEAN PATENT APPLICATION

(11) **EP 2 755 383 A1**
(43) Date of publication of application: **16.07.2014**
(21) Application number: 12829458.4
(22) Date of filing: 07.09.2012
(51) Int. Cl.: H04N 7/173, H04H 60/64

(54) **COMMUNICATION TERMINAL, VIDEO DISPLAY SYSTEM, METHOD OF EXECUTING COMMUNICATION TERMINAL PROCESSING, AND PROGRAM**

(30) Priority: 09.09.2011 JP 2011197343
(71) Applicant: NTT Docomo, Inc., Tokyo 100-6150 (JP)
(72) Inventor: KIKUCHI, Daisuke, Tokyo 100-6150 (JP)
(74) Representative: HOFFMANN EITLE
(86) International application number: PCT/JP2012/072869
(87) International publication number: WO 2013/035834

(57) **Abstract**

The present invention provides transmitting additional information without superimposing the additional information on an airwave, in a universally applicable way. A communication terminal (Sa1) transmits user information via a communication network. The communication terminal receives (Sa2) additional information in response to the user information. Then, the communication terminal initiates (Sa3) receiving of an airwave. In other words, the communication terminal receives the additional information via a communication path other than the airwave. The additional information includes data showing an additional image superimposed on images carried by the airwave (main images). The communication terminal displays (Sa4) combined images, which are generated by combining the main images and the additional image, based on the airwave and the additional information. If a user identifies a position on a first display area (Sa5: YES), the communication terminal displays images corresponding to the identified position, as a process corresponding to the identified position.

## Description

### TECHNICAL FIELD

The present invention relates to adding information to broadcasted images.

### RELATED ART

A technology for adding information to broadcasted images is known. In general, such a technology provides broadcasting an airwave in which additional information is superimposed on an image(s). For example, Patent Document D1 discloses broadcasting an airwave showing a TV program and contents of data broadcast.

### PRIOR ART

Patent Document D1: JP 2002-330422

### SUMMARY OF THE INVENTION

### PROBLEM TO BE SOLVED

In broadcasting, an airwave is transmitted to an unspecified number of users. Therefore, if additional information to be superimposed on an image is included in the airwave, the additional information received by users has to be identical for all the users. Further, if additional information is included in the airwave, a device for receiving the information has to include a hardware component for separating the additional information from the broadcast image.

Thus, the present invention enables transmission of additional information without including the additional information in an airwave, in a universally applicable way.

### SOLUTION

According to one aspect of the invention, there is provided a communication terminal including: a receiving unit that receives an airwave carrying images; a communicating unit that receives additional information from a server device via a communication network, the additional information being information to be added to the images carried by the airwave received by the receiving unit and including coordinate information showing a coordinate of a position within the images, the coordinate information corresponding to a time, the time relating to the images; a displaying unit that displays on a display area the image carried by the airwave received by the receiving unit; an input unit that receives an input operation performed by a user identifying a position within the display area; and an executing unit that executes a process in response to a result of a comparison of a first position and a second position, the first position being a position identified by the input operation received by the receiving unit when the images are displayed in the display area by the displaying unit, the second position being a position having a coordinate shown by the coordinate information included in the images received by the communicating unit.

The server device may identify the communication terminal or a user of the communication terminal, and the communicating unit may receive the additional information whose content depends on the communication terminal or the user.

The additional information may include process information corresponding to a process executed by the executing unit, and the executing unit may execute the process based on the process information.

The communication terminal may further include a superimposing unit that superimposes an image corresponding to the additional information received by the receiving unit on the image carried by the airwave received by the receiving unit. The displaying unit may display the combined image generated by the superimposing unit.

The communication terminal may further include a recording unit that records, when the receiving unit receives the input operation to identify the position, the identified position and time when the instruction is received. The executing unit may compare, by referring to the position and the time recorded by the recording unit, the recorded position and a position shown by the coordinate information.

The communicating unit may transmit feedback information corresponding to the position identified by the input operation received by the receiving unit, and receive the additional information reflecting the feedback information transmitted by a plurality of communication terminals including the communication terminal.

According to another aspect of the invention, there is provided an image displaying system including the above communication terminal and a server device that transmits at least the additional information.

According to yet another aspect of the invention, there is provided a processing method including: receiving an airwave carrying images; receiving additional information from a server device via a communication network, the additional information being information added to the images carried by the received airwave and including coordinate information showing a coordinate of a position within the images, the coordinate information corresponding to a time, the time relating to the images; displaying on a display area the image carried by the received airwave; receiving an input operation performed by a user identifying a position within the display area; and executing a process in response to a result of a comparison of a first position and a second position, the first position being a position identified by the received input operation when the images are displayed in the display area, the second position being a position having a coordinate shown by the received coordinate information.

According to yet another aspect of the invention, there is provided a program causing a computer to execute a process, the process including: receiving an airwave carrying images; receiving additional information from a server device via a communication network, the additional information being information added to the images carried by the received airwave and including coordinate information showing a coordinate of a position within the images, the coordinate information corresponding to a time, the time relating to the images; displaying on a display area the image carried by the received airwave; receiving an input operation performed by a user identifying a position within the display area; and executing a process in response to a result of a comparison of a first position and a second position, the first position being a position identified by the received input operation when the images are displayed in the display area, the second position being a position having a coordinate shown by the received coordinate information.

### EFFECT OF THE INVENTION

According to the present invention, transmission of additional information, without superimposing the additional information on an airwave, in a universally applicable way is enabled.

### BRIEF DESCRIPTION OF THE DRAWINGS

Exemplary embodiments will be described with reference to the following drawings, wherein:
FIG. 1 shows a general configuration of an image displaying system;
FIG. 2 shows a hardware configuration of a communication terminal;
FIG. 3 shows a hardware configuration of a server device;
FIG. 4 shows a functional configuration of the communication terminal;
FIG. 5 shows a flowchart illustrating a process for displaying images at the communication terminal;
FIG. 6 shows an example of an image displayed on a touch screen;
FIG. 7 shows an example of an image or images displayed on the touch screen;
FIG. 8 shows an example of an image or images displayed on the touch screen;
FIG. 9 shows a flowchart illustrating a process executed by the communication terminal;
FIG. 10 shows a functional configuration of the communication terminal;
FIG. 11 shows an example of an image displayed on the touch screen;
FIG. 12 shows a flowchart illustrating a process executed by the communication terminal when displaying images; and
FIG. 13 shows an example of an image displayed on the touch screen.

### BRIEF DESCRIPTION OF REFERENCE NUMERALS

10...Image displaying system, 100...broadcast station, 200...communication terminal, 210...receiving unit, 220...communication unit, 230...touch screen, 231...displaying unit, 232...input unit, 240...sound unit, 250...storage unit, 260...controlling unit, 261...data obtaining unit, 262...superimposing unit, 263...executing unit, 264...recording unit, 300...server device, 310...communication unit, 320...storage unit, 330...controlling unit, 400...network

### DETAILED DESCRIPTION OF EXEMPLARY EMBODIMENT

### First exemplary embodiment

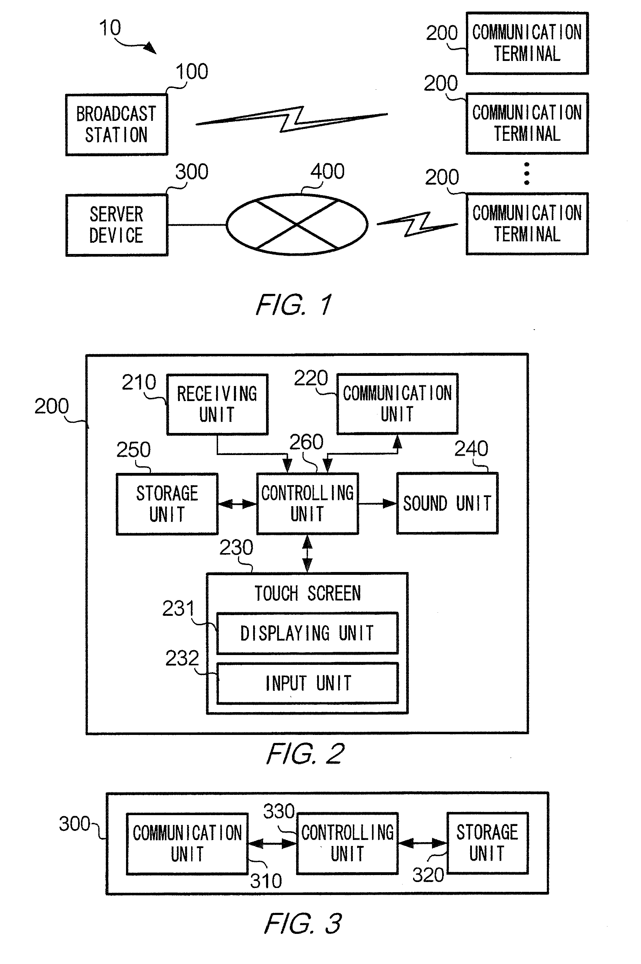

FIG. 1 shows a general configuration of image displaying system 10 according to one exemplary embodiment of the invention. Image displaying system 10 is a system for displaying an image using a combination of an airwave and a communication network. Image displaying system 10 includes broadcast station 100, communication terminal 200, server device 300, and network 400.

Broadcast station 100 is wireless communication equipment for transmitting an airwave. Here, an "airwave" refers to a radio wave used for a public transmission. In other words, the airwave is transmitted not to a specific user but to general public users. Frequency of and technology for transmitting the airwave is not restricted to a specific frequency and technology, as long as communication terminal 200 can receive the airwave. The airwave may be transmitted by an artificial satellite, for example. According to the present exemplary embodiment, the airwave is transmitted by digital terrestrial broadcasting. The airwave may be an airwave of so-called One-Seg (a one segment partial receiving service for a mobile phone or a mobile device). The airwave may carry sound in addition to images.

Communication terminal 200 is an electric device for viewing broadcast information included in the airwave. Communication terminal 200 includes a function to receive data from server device 300, in addition to a function to receive the airwave. In other words, communication terminal 200 can receive information via plural different paths. Communication terminal 200 is a wireless communication terminal, for example, a mobile phone (including a smart phone), a tablet device, or a PDA (Personal Digital Assistant). Communication terminal 200 communicates wirelessly via network 400.

Network 400 is a network including at least a wireless communication. Here, the wireless communication network is a mobile communication network that complies with a technical standard such as an IMT (International Mobile Telecommunication)-2000 or LTE (Long Term Evolution). Alternatively, the wireless communication network may be a wireless LAN (Local Area Network). Further, network 400 may be a composite network of a mobile communication network and the Internet.

FIG. 2 shows a hardware configuration of communication terminal 200. Communication terminal 200 includes receiving unit 210, communication unit 220, touch screen 230, sound unit 240, storage unit 250, and controlling unit 260. Communication terminal 200 may include another unit(s) in addition to the units shown in FIG. 2; for example, a unit for notifying a user of information, such as a light-emitting diode or a vibrator.

Receiving unit 210 receives an airwave. Communication unit 220 transmits and receives data via network 400. Receiving unit 210 and communication unit 220 include an antenna for receiving a radio wave and a decoder for decoding the received airwave, respectively. Receiving unit 210 provides image data showing images carried by the received airwave to controlling unit 260.

Touch screen 230 displays images (including motion pictures) and receives an instruction from a user. The instruction is input by touching of the touch screen so as to identify a position on touch screen 230. More specifically, touch screen 230 includes display unit 231 and input unit 232.

Display unit 231 displays an image. Display unit 231 includes a display panel including a liquid crystal device or an organic EL (electroluminescence) device, and a driver circuit to drive the display panel. Input unit 232 receives an input operation performed by a user by sensing a user's touch on the screen. Input unit 232 includes, for example, a planar sensor overlaid on the screen. Input unit 232 may detect a touch of a finger of a user on the screen or a touch of a special device (stylus, for example), by sensing a pressure or capacitance so as to detect a touch of a finger of a user on the screen. Input unit 232 may sense a distance from the screen to the finger or the special device instead of sensing the touch. Input unit 232 provides coordinate information showing a position identified by the input by the user, to controlling unit 260. The coordinate information includes x-coordinate and y-coordinate in Cartesian coordinates. In the Cartesian coordinates, x-axis is defined as a horizontal direction of the screen and y-axis is defined as a vertical direction of the screen.

Sound unit 240 outputs sound. Sound unit 240 may include a speaker, or an earphone jack to which an earphone or a speaker is connected.

Storage unit 250 stores data used in controlling unit 260. Storage unit 250 includes, for example, a hard disk drive or a flash memory. Storage unit 250 may store a program executed by controlling unit 260, and information such as additional information or user information, to be described later. Storage unit 250 may include a detachable storage medium such as a memory card. The storage medium may be a UIM (User Identity Module) for identifying a user (in other words, a subscriber using communication terminal 200).

User information is information for identifying communication terminal 200 or a user of communication terminal 200. User information includes, for example, an ID. User information may include an attribute (for example, age, gender, residence, occupation, hobbies, preferences, or subscription to a specific service) of a user. In other words, user information may be unique for each communication terminal 200 or for each user.

Controlling unit 260 controls operation of communication terminal 200. Controlling unit 260 includes a processor such as a CPU (Central Processing Unit) or a GPU (Graphics Processing Unit), and a memory. Controlling unit 260 receives data or displays an image in accordance with execution of a program.

Server device 300 is a server device for providing the additional information to communication terminal 200. Here, additional information refers to information relating to images carried by the airwave. The additional information includes coordinate information showing positions of the images. The coordinate information includes x-coordinate and y-coordinate in Cartesian coordinates, similar to coordinate information provided by input unit 232. Further, the coordinate information corresponds to the images in chronological order, so that correspondence between a coordinate and an image at a given point of time can be identified. More specifically, each item of coordinate information includes time information. The time information includes a day and time to which the coordinated information corresponds. The time information may be described as a standard time (for example, Japan standard time) or as a time relative to the start time of a TV program. In other words, the format of the time is not restricted as long as the correspondence between the images and the coordinate information can be identified.

FIG. 3 shows a hardware configuration of server device 300. Server device 300 includes communication unit 310, storage unit 320, and controlling unit 330. Communication unit 310 communicates data. Communication unit 310 transmits, for example, the additional information to communication terminal 200 via network 400. Storage unit 320 stores data. In the present exemplary embodiment, storage unit 320 stores additional information prior to the operation. Controlling unit 330 controls operation of server device 300. Controlling unit 330 controls storage or transmission of the additional information, for example.

It is to be noted that plural items of additional information for a single TV program or commercial message may be prepared for plural users, in response to an attribute of a user. For example, server device 300 may store additional information for men and additional information for women. Further, server device 300 may store additional information unique to a hobby or a preference of a user.

The configuration of image displaying system 10 is described above. Broadcast station 100 transmits an airwave in accordance with a predetermined time schedule. The images carried by the airwave show various kinds of TV programs such as news, dramas, or animation. Further, the images carried by the airwave may include commercial messages in addition to TV programs.

A service provider using server device 300 can obtain the additional information corresponding to the TV programs or the commercial messages. Server device 300 stores the obtained additional information in correspondence with the TV programs or the commercial messages in storage unit 320. Server device 300 transmits the additional information to communication terminal 200.

Communication terminal 200 receives the airwave in accordance with an instruction by a user, and displays the images. The user selects a channel to be viewed, if there are plural channels. Communication terminal 200 receives additional information corresponding to TV programs and commercial messages carried by the airwave. In the present exemplary embodiment, communication terminal 200 receives the additional information prior to the start of a TV program or a commercial message, or in parallel with the TV program or the commercial message. Here, the TV program is recorded prior to broadcasting. The images to be displayed at any point of time are known. In other words, a TV program excludes a live program such as a sports event, in which it cannot be predicted what will occur (in other words, what is displayed) in the event.

In the present exemplary embodiment, communication terminal 200 displays an image showing a position identified by the coordinate information included in the additional information, on the images carried by the airwave. Hereinafter, the images carried by the airwave are referred to as "main images." Further, an image added based on the additional information is referred to as "additional image." It is to be noted that the additional image need not be restricted to a motion picture and may be a still image.

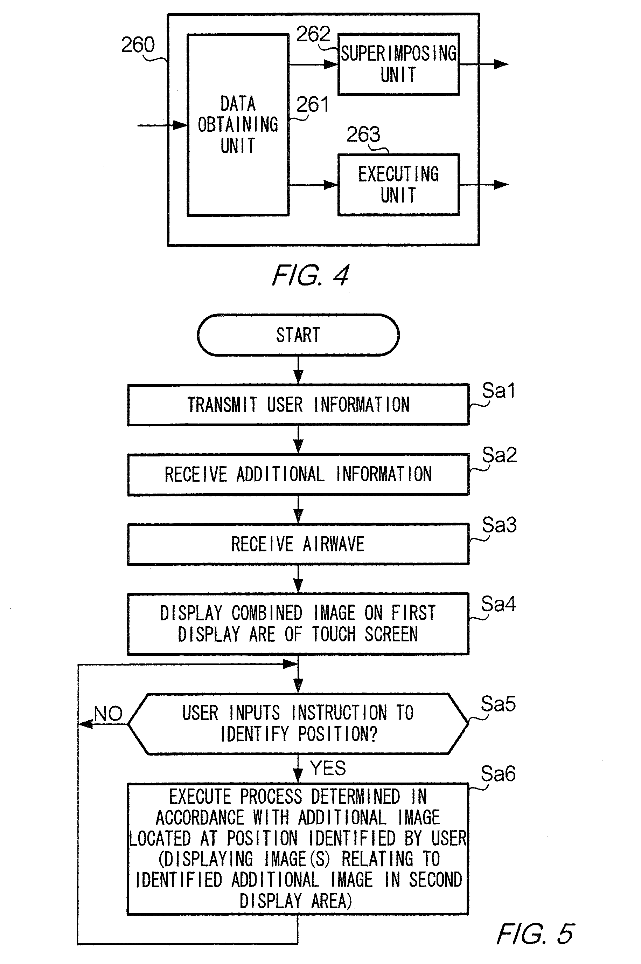

FIG. 4 shows a functional configuration of communication terminal 200. As a result of execution of a program by controlling unit 260, communication terminal 200 includes data obtaining unit 261, superimposing unit 262, and executing unit 263. Data obtaining unit 261 obtains image data from receiving unit 210, obtains the additional information from communication unit 220 or storage unit 250, and obtains the coordinate information from input unit 232.

Superimposing unit 262 superimposes (overlays) an additional image on a main image. Superimposing unit 262 combines the main image and the additional image so that the additional image is overlaid on the main image, based on the image data and the additional information. Superimposing unit 262 displays the combined image on display unit 231. Hereinafter, the image generated by combining of the main image and the additional image by superimposing unit 231 is referred to as a "combined image." Data showing the additional image is included in the additional information. The additional image is displayed based on the image data. Alternatively, the additional image may be merely lines or a point indicating a position shown by the coordinate information. In such a case, the additional information may not include the image data.

Executing unit 263 executes a process in response to an input by a user when images carried by the airwave are displayed. More specifically, executing unit 263 compares a position shown by the coordinate information provided by input unit 232 (in other words, a position indicated by the user) with a position shown by the coordinate information included in the additional information. Executing unit 263 executes one of a plurality of processes, selected according to the result of the comparison.

It is to be noted that the additional information may include process information corresponding to a process to be executed by executing unit 263. In this case, executing unit 263 executes a process based on the process information. Further, if the coordinate information included in the additional information shows plural positions, executing unit 263 may execute one of a plurality of processes, selected according to a position selected from among the plural positions.

FIG. 5 shows a flowchart illustrating a process for displaying images by communication terminal 200. In this process, communication terminal 200 reads user information from storage unit 250, and transmits (in step Sa1) the user information to server device 300. The user information may be transmitted independently of displaying of the images. For example, the user information may be transmitted when the power of communication terminal 200 is turned on. In other words, communication terminal 200 may transmit the user information on a date before the user views the images.

Then, communication terminal 200 initiates receiving the additional information (in step Sa2) and an airwave (in step Sa3). It is preferred that communication terminal 200 receives the additional information prior to the airwave. However, communication terminal 200 may receive the additional information and the airwave at about the same time. Here, server device 300 can transmit the additional information corresponding to the communication terminal 200 or the user, based on the user information of the communication terminal 200. When receiving the additional information and the airwave, communication terminal 200 combines the main image carried by the airwave and the additional image corresponding to the additional information, so as to generate a combined image. Communication terminal 200 displays (in step Sa4) the combined image on touch screen 230.

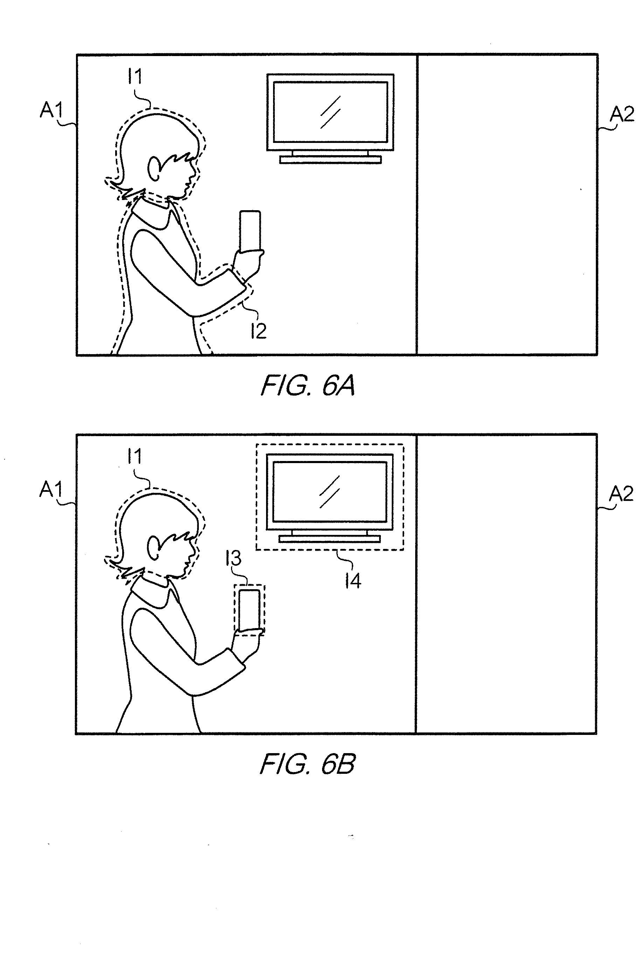

FIG. 6 shows an example of an image displayed on touch screen 230. In this example, display unit 231 includes first display area A1 and second display area A2. First display area A1 is an area for displaying the combined image, and second display area A2 is an area for displaying an image or images relating to the combined image. In this example, in first display area A1, an actress, holding a new mobile phone product and standing in front of a television, is displayed.

FIG. 6(a) shows an example of an image displayed if the user is a female. In this example, communication terminal 200 displays additional images I1 and I2. Additional image I1 includes lines (a frame) surrounding the face of the actress. Additional image I2 includes lines (a frame) surrounding the dress of the actress. It is to be noted that additional image I2 may be subdivided into plural additional images, for example, an additional image for the dress, and another additional image for the jewelry (a necklace or a ring, for example). Additional images I1 and I2 may have appear such that the user can easily identify that they are additional images, for example, the lines may be shown as blinking.

FIG. 6(b) shows an example of an image displayed if the user is a male. In this example, communication terminal 200 displays additional images I3 and I4 in addition to additional image I1. Additional image I1 is similar to that shown in FIG. 6(a). Additional images I3 and I4 are not displayed if the user is a female. Additional image I3 includes lines (a frame) surrounding the mobile phone hold by the actress. Additional image I4 includes lines (a frame) surrounding the television.

As described above, communication terminal 200 can display different additional images depending on information associated with communication terminal 200 or a user. Although different additional images are displayed, a common additional image, such as additional image I1, may be included in the images.

Communication terminal 200 waits for an input operation by the user while displaying the combined image. More specifically, communication terminal 200 determines (in step Sa5) whether the user inputs an instruction to identify a position, by determining whether coordinate information is provided by touch screen 230. At this time, communication terminal 200 further determines whether an additional image is displayed on the position identified by the user. For example, in FIG. 6, communication terminal 200 determines whether the user identifies a position within the frame border of the additional image.

If an additional image is displayed on a position identified by the user, in other words, if a position shown by the coordinate information provided by touch screen 230 is identical to or included in a position (or an area) shown by the coordinate information included in the additional information, communication terminal 200 executes (in step Sa6) a process determined in accordance with the additional image located at the position identified by the user. In the present exemplary embodiment, communication terminal 200 displays an image or images relating to the identified (or selected) additional image in second display area A2. At this point in time, communication terminal 200 may notify the user of the execution of the process in step Sa6, by vibrating the vibrator or blinking the light. In such a case, communication terminal 200 may await an input operation by the user. If an instruction to initiate the process is input by the user, communication terminal 200 may initiate the process in step Sa6.

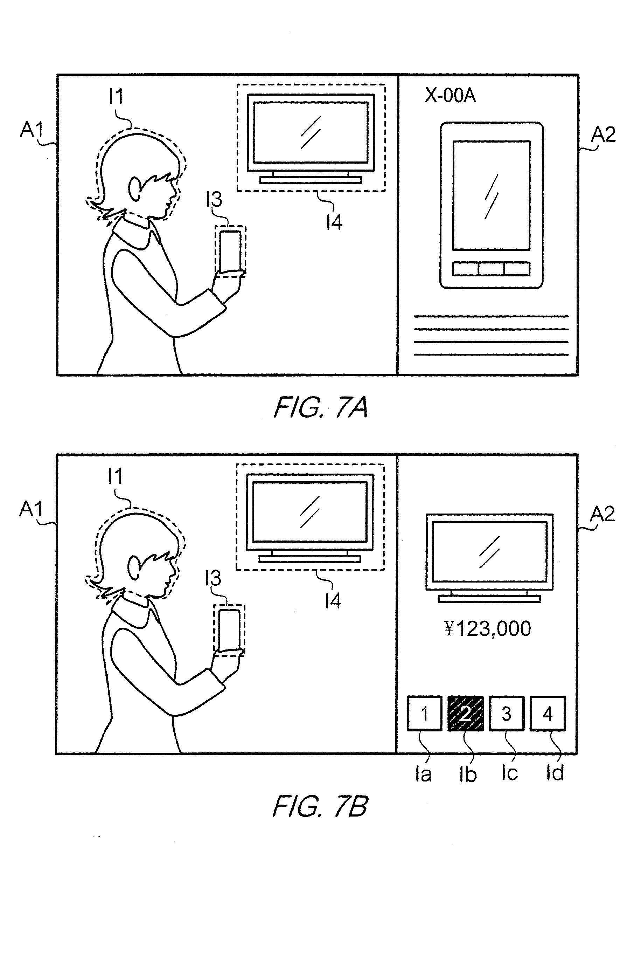

FIG. 7 shows an example of an image or images displayed in second display area A2. FIG. 7(a) is an example of an image if additional image I3 shown in FIG. 6(b) is selected by the user. In this example, communication terminal 200 displays product information relating to the mobile phone product. Here, the product information may include a web page describing the product. The data showing the web page is received by communication unit 220. In such a case, the additional information includes information showing the URL (Uniform Resource Locator) of the web page describing the product, as the process information. Alternatively, the additional information may include data showing a description of the product, as the process information. The product information may be provided by a provider of the product or a third party other than the provider. For example, the product information may be a web site for purchasing the product, or a web site describing a review of the product. It is to be noted that the selected additional information does not necessarily relate to a product (for example, it may relate to a person or physical environment), and that information relating to the person or the physical environment may be displayed in second display area A2.

The user may identify a position multiple times while viewing the images. In such a case, if a user identifies a new position, communication terminal 200 may update an image shown in second display area A2, in response to the identified position. Communication terminal 200 may store data showing the images displayed in second display area A2, so that the user can browse the information in response to an input operation performed by the user after viewing the images. The user can browse information in second display area A2 after the user finishes watching a TV program or a commercial message.

FIG. 7(b) shows another example of an image displayed in second display area A2. In this example, communication terminal 200 displays information (an image or images) relating to a position identified by the user, along with images Ia, Ib, Ic, and Id showing links to the information. FIG. 7(b) shows an example in which the user identifies a position four times. Link Ia corresponds to the first identification, link Ib corresponds to the second identification, link Ic corresponds to the third identification, and link Id corresponds to the fourth identification. If the user identifies a position relating to one of links Ia to Id, communication terminal 200 displays information relating to the identified link in second display area A2. If the user identifies a new position, communication terminal 200 updates information displayed in second display area A2. In other words, links Ia, Ib, Ic, and Id functions in a similar way to bookmarks in a web browser.

It is to be noted that communication terminal 200 may display a captured image (or a screen shot) of the combined image in second display area A2 when the user identifies an additional image. In such a case, communication terminal 200 may display a captured image (or screen shot) of the main image instead of the combined image. Further, communication terminal 200 may display plural thumbnail images in second display area A2, each of which shows a thumbnail of the captured image.

Further, when displaying the captured image, communication terminal 200 may record the main image in a predetermined time period before and after the time when the captured image is generated. In such a case, if the user identifies a thumbnail image, communication terminal 200 replays the images corresponding to the identified thumbnail image (recorded images). In this example the user is enabled to review a part of the images the user wishes to view again, after viewing the images. Each of these processes (displaying thumbnails and recording images) is another example of a process executed by executing unit 263.

As described above, communication terminal 200 can obtain additional information via a communication path other than an airwave. Therefore, communication terminal 200 can obtain the additional information prior to receiving the airwave, or obtain the additional information depending on the communication terminal or a user of the communication terminal 200. Further, communication terminal 200 can provide information more detailed than that shown in the main image, by including information (for example, product information) other than the coordinate information in the additional information. Further, the information may be changed in response to an attribute(s) of a user or a device, by providing an additional image(s) showing the coordinate information, whereby a user can easily know from where to obtain more information on the images.

It is to be noted that the user information may not be used. If there is no need to change an additional image or a process when a user identifies a position, communication terminal 200 may not transmit the user information. In such a case, server device 300 may not store plural items of additional information corresponding to attributes of users.

Further, an additional image(s) may not be displayed. If many additional images are displayed in one screen, viewing of the main image is interrupted because of the complicated nature of the displayed image. In a case that no additional image is displayed, a user cannot easily understand a position to be identified so as to display the product information. Thus, communication terminal 200 is able to provide entertainment to a user.

### Second exemplary embodiment

According to the second exemplary embodiment, image displaying system 10 provides a service different from that described in relation to the first embodiment. The present exemplary embodiment provides a service whereby images of a video game are carried by an airwave; for example, to prompt a user to play the video game.

The configuration of the system according to the present exemplary embodiment is the same as that of the first exemplary embodiment. Therefore, description of the configuration is omitted. Elements in common with the first exemplary embodiment will be referred to by using reference numerals the same as those used to describe the first exemplary embodiment.

In the present exemplary embodiment, operations are different from those in the first exemplary embodiment in that the additional image is not superimposed until the user identifies a position. In other words, in the present exemplary embodiment, positions shown by the coordinate information are not visible on the main image. In the present exemplary embodiment, superimposing unit 262 superimposes an additional image on the main image at a timing different from that in the first exemplary embodiment. More specifically, in the present exemplary embodiment, display unit 231 does not display the combined image before inputting an instruction to identify a point on the images but displays the combined image after inputting an instruction to identify a point on the images. In other words, a process for displaying the combined image is one example of a process executed by executing unit 263.

Further, operations in the present exemplary embodiment are different from those in the first exemplary embodiment in that user information is not used.

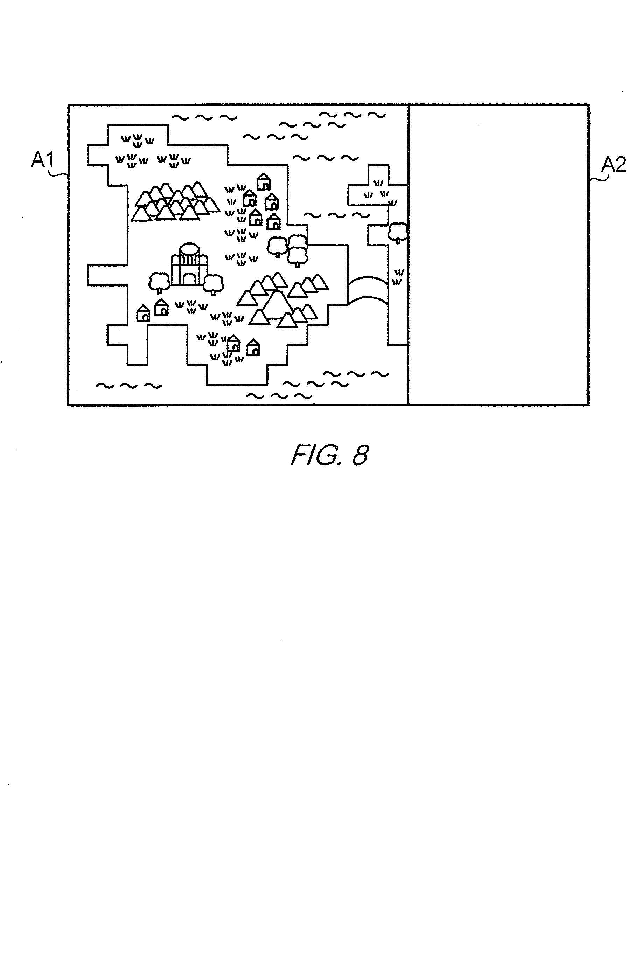

FIG. 8 shows an example of an image displayed on touch screen 230 in accordance with the second exemplary embodiment. In this example, a map is displayed on a display area, and a user plays a video game that is a kind of treasure hunt, to find an item hidden at a position on the map. On the display area of display unit 231, a position where the item is hidden and positions where the item is not hidden are defined prior to initiating the video game. Communication terminal 200 distinguishes these positions in accordance with the coordinate information included in the additional information. In other words, additional information includes coordinate information showing a position on the images is the position where the item is hidden (or not hidden).

In this example, images shown on display unit are still images. However, the image shown on the display unit may be a motion picture. Further, the position where the item is hidden may be changed in response to a period of time having passed. Further, the position where the item is hidden may disappear (the item cannot be found) at a predetermined timing and the position where the item is hidden may appear at other timings.

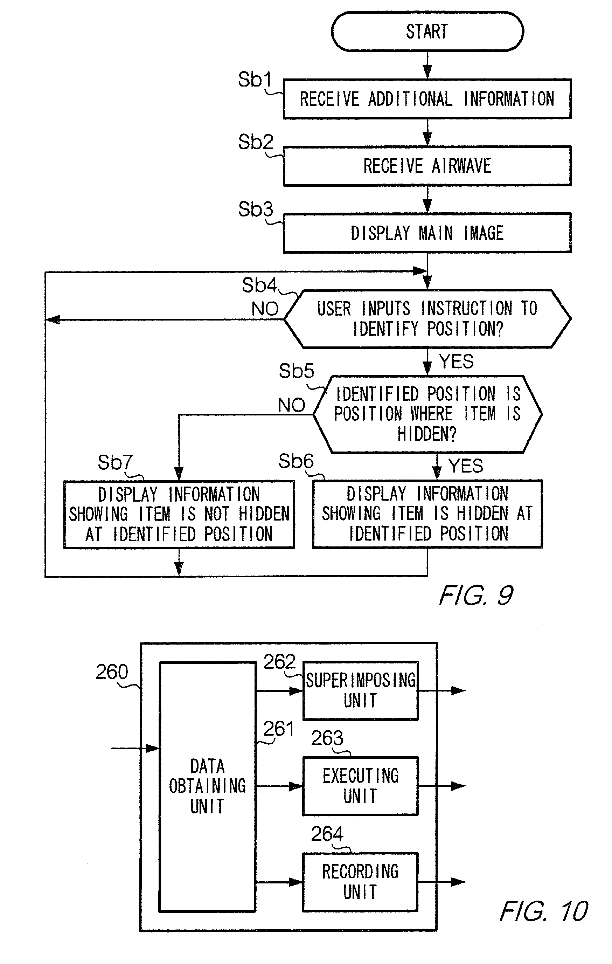

FIG. 9 shows a flowchart illustrating a process executed by communication terminal 200. In this process, communication terminal 200 receives the additional information (in step Sb1) and an airwave (in step Sb2). These processes are similar to those in steps Sa2 and Sa3 in the first exemplary embodiment. Then, communication terminal 200 displays (in step Sb3) on touch screen 230 the main image carried by the airwave.

Communication terminal 200 waits for an input operation by the user while displaying the main image. More specifically, communication terminal 200 determines (in step Sb4) whether the user inputs an instruction to identify a position, by determining whether coordinate information is provided by touch screen 230. If it is determined that an instruction to identify a position is input by the user, communication terminal 200 refers to the coordinate information included in the additional information. Communication terminal 200 determines (in step Sb5) whether the identified position is the position where the item is hidden, by comparing the coordinate information included in the additional information with the coordinate information provided by touch screen 230.

If the position identified by the user is the position where the item is hidden, communication terminal 200 displays (in step Sb6) information showing the item is hidden at the identified position, on a predetermined area in the display area. If the position identified by the user is the position where the item is not hidden, communication terminal 200 displays (in step Sb7) information showing that the item is not hidden at the identified position, on a predetermined area in the display area. In other words, in steps Sb6 and Sb7, communication terminal 200 switches the displayed image from the main image to the combined image.

In steps Sb6 and Sb7, the information may be displayed at a position (for example, the center of the displayed area) independent from the position identified by the user, or may be displayed at a position near the position identified by the user. Here, characters and images displayed as the additional image are examples of the process information. The process information is included in the additional information along with information showing a relationship with the coordinate information. It is to be noted that communication terminal 200 may delete the additional image from the screen and display the main image.

According to the above exemplary embodiment, a user can ascertain whether the identified position is correct, without waiting for the main image to be updated. Further, in a case that the user does not wish to know the result, the user may choose not to touch touch screen 230. Therefore, the user can select a way to view images in response to the user's preferences at the time.

It is to be noted that the service provided by the present exemplary embodiment may not relate to a video game, as long as the service relates to a process in response to the identified position when the coordinate information cannot be seen by the user. Further, in the present exemplary embodiment, the additional image may not be superimposed on the main image. For example, the display area on the touch screen may be divided into the first display area and the second display area, as in the first exemplary embodiment. The main image may be displayed on the first display area and the additional image may be displayed on the second display area. In such a case, superimposing by superimposing unit 262 is not performed.

### Third exemplary embodiment

In the present exemplary embodiment, image displaying system 10 has a configuration in common with that in the first exemplary embodiment, and provides a service different from those in the first and the second exemplary embodiments. The service provided in the present exemplary embodiment relates to statistical results of a questionnaire wherein, for example, a question is answered by plural users and each user is notified of the results of the questionnaire. Therefore, the present exemplary embodiment can be applied to an example of a live program, where it cannot be forecast what will happen.

In the following, description of elements in common with those of the first exemplary embodiment is omitted. Elements in common with the first exemplary embodiment will be referred to by using reference numerals the same as those used to describe the first exemplary embodiment.

FIG. 10 shows a functional configuration of controlling unit 260 in communication terminal 200. Controlling unit 260 has hardware configuration identical with that of the first embodiment, although functions implemented by programs are different from those in the first and the second exemplary embodiments. Controlling unit 260 includes recording unit 264 in addition to data obtaining unit 261, superimposing unit 262, and executing unit 263.

When an instruction to identify a position is input by a user, in other words, when input unit 232 provides the coordinate information, recording unit 264 records a position and time shown by the coordinate information. In other words, recording unit 264 records a time and a place identified by the user. Recording unit 264 may record the data in the memory in controlling unit 260 or storage unit 250.

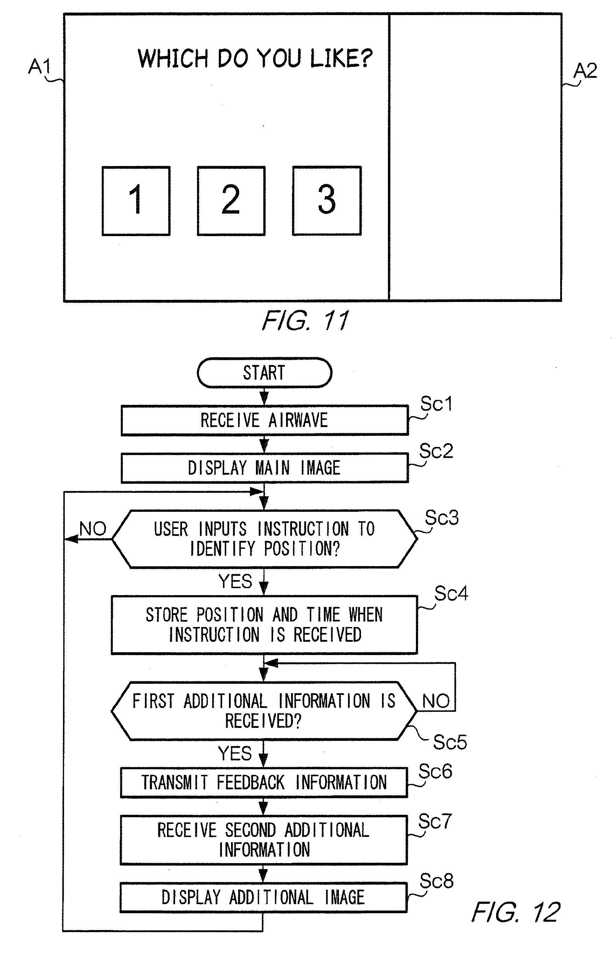

FIG. 11 shows an example of an image displayed on touch screen 230. In this example, in the display area of display unit 231, a question and response options 1 to 3 are displayed. If a user wishes to select option 1, the user identifies an image showing option 1.

FIG. 12 shows a flowchart illustrating a process executed by communication terminal 200 in the present exemplary embodiment. In the process, communication terminal 200 initiates (in step Sc1) receiving of an airwave. Communication terminal 200 displays (in step Sc2) an image carried by the airwave, in other words, the main image. In this situation, communication terminal 200 waits for input of an instruction operation by a user, and determines (in step Sc3) whether an instruction to identify a position is input by a user. The process in step Sc3 is similar to that in step Sb4 in the second exemplary embodiment. Communication terminal 200 repeats the determination until an instruction is input by the user.

If an instruction to identify a position is input by a user, communication terminal 200 stores (in step Sc4) the position and the time when the instruction is received. Then, communication terminal 200 determines (in step Sc5) whether additional information including the coordinate information and time information (hereinafter the additional information is referred to as "first additional information") is received, until communication terminal 200 receives the first additional information.

In the present exemplary embodiment, the first additional information includes which option is selected in accordance with a position shown by the coordinate information. The first additional information includes, in an example shown in FIG, 11, information showing a position of option 1, option 2, or option 3. Further, if there are plural questions, the first additional information may include information showing the number of the corresponding question.

When receiving the first additional information, communication terminal 200 can determine which option is selected by the user by comparing the first additional information with the information recorded in step Sc4. Communication terminal 200 refers to the information recorded in step Sc4, and transmits to server device 300 (in step Sc6) information showing a user's answers. Hereinafter, the information transmitted in step Sc6 is referred to as "feedback information."

If there are plural questions, the feedback information may include information showing a time when the user identifies the position, instead of the information showing the number of the corresponding question. Server device 300 can identify which question the answer corresponds to, even if there are plural questions. If there is only one question, server device 300 can identify an option selected by the user, according only to a position identified by the user.

Server device 300 receives plural items of feedback information from plural communication terminals 200. If server device 300 receives a number of answers greater than a predetermined number, or a predetermined period for answering the questionnaire, server device 300 tallies the answers based on the feedback information. Then, server device 300 transmits information showing the results of the tally, as the second additional information. Thus, each communication terminal 200 can receive (in step Sc7) the second additional information. When receiving the second additional information, communication terminal 200 displays (in step Sc8) the additional image based on the received second additional information.

The second additional information is additional information in which plural items of additional information from plural communication terminals 200 are reflected. The second additional information includes data showing characters and images shown as the additional image in addition to the coordinate information showing a position and time where and when the additional image is to be displayed, and time information. It is to be noted that the second additional information may not include time information if there is only one question.

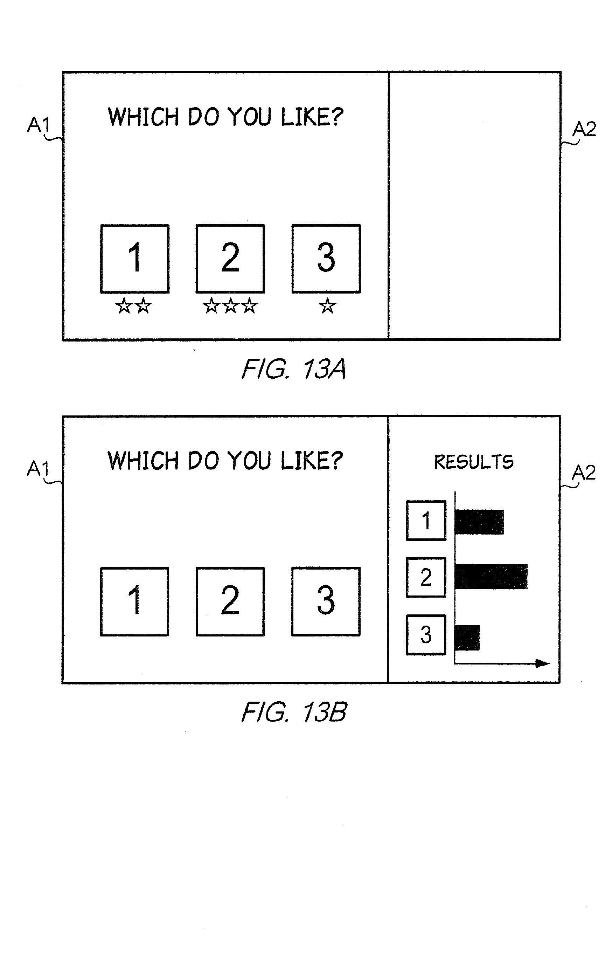

FIG. 13 shows an example of the additional image displayed on touch screen 230 in the present exemplary embodiment. FIG. 13(a) shows an example where the additional image is displayed in first display area A1 as the combined image. FIG. 13(b) shows an example where the additional image is displayed in second display area A2 not as the combined image. In this example, the second additional information may not include the coordinate information. It is to be noted that the additional image is not restricted to the example, and there may be a number of users who select the options.

As described above, according to communication terminal 200 in the present exemplary embodiment, by recording unit 264 recording the user's input, even if the additional information (more specifically, the first additional information) is not received prior to the input, the input and the additional information can be compared. In other words, according to communication terminal 200 of the present exemplary embodiment, the comparison can be performed even if the additional information is not received when the images are being viewed.

Further, communication terminal 200 provides more interactive viewing of the images, by transmitting the feedback information and receiving the additional information (more specifically, the second additional information) reflecting the transmitted feedback information. It is to be noted that server device 300 may tally the answers according to attributes of the users. In such a case, the second additional information may be different depending on attributes of the users. According to this example, the users can ascertain the results according to gender or age, for example.

It is to be noted that the first additional information may be received prior to an input operation by a user (in other words, step Sc3). In such a case, communication terminal 200 can display the combined image based on the first additional image instead of the main image. The combined image may include a question or optional responses (options 1 to 3 in FIG. 11, for example) to the question.

### Modification

The invention is not restricted to the above exemplary embodiments, and may be implemented with other embodiments. For example, the present invention may be implemented in line with the following modifications. Plural modifications may be combined.
(1) Touch screen 230 is an example of receiving unit. However, the receiving unit is not restricted to touch screen 230. The receiving unit may be a button (a so-called a hardware key) independent from a display unit, or a pointing device such as a mouse. In general, the receiving unit may not be separated from a display unit as long as the receiving unit can receive an instruction input by a user (identification by a user).
(2) Server device 300 may receive the user information from an external device such as a database, instead of communication terminal 200. For example, if an ID of a user and attributes of the user are included in the user information, communication terminal 200 may store only the ID and a database may store a set of ID and attributes. In such a case, communication terminal 200 may transmit only the ID to server device 300, and server device 300 may transmit an inquiry to the database relating to the attributes corresponding to the ID.
(3) The invention is not restricted to embodiments where a user participates in real-time activity using images transmitted in an airwave. The images may be recorded and replayed. In such a case, communication terminal 200 may store data showing the images with the additional data, along with their relationship.
(4) The invention allows the additional information to be included in an airwave. In other words, the invention may use the additional information included in an airwave and the additional information provided via a network together. If additional information includes images commonly provided to all users and images provided uniquely to a user, the former is transmitted as the additional information included in an airwave and the latter is transmitted as the additional information provided via a network.
(5) The invention may include an embodiment where the additional image is displayed and an embodiment where the additional image is not displayed. Communication terminal 200 may execute a process relating to only one of the embodiments, or may select a process from among processes relating to the plural embodiments, to be executed. In a case that communication terminal 200 can execute processes relating to the plural embodiments, the additional information may include data showing which process is to be executed. The data shows, for example, whether the additional information is displayed in the first exemplary embodiment or on which area of first display area A1 and second display area A2 the additional information is displayed.
(6) The invention may be implemented as not only communication terminal 200 or image displaying system 10 but also as a program or an information processing method executed by communication terminal 200. The program may be provided by download via a network such as the Internet or by a recording medium such as an optical disk, so as to install the program on a computer. Further, the configuration of the system is not restricted to an example shown in FIG. 1, and communication terminal 200 and server device 300 may be connected by wire.

## Claims

1. A communication terminal comprising:
a receiving unit that receives an airwave carrying images;
a communicating unit that receives additional information from a server device via a communication network, the additional information being information added to the images carried by the airwave received by the receiving unit and including coordinate information showing a coordinate of a position within the images, the coordinate information corresponding to a time, the time relating to the images;
a displaying unit that displays on a display area the image carried by the airwave received by the receiving unit;
an input unit that receives an input of an instruction by a user identifying a position within the display area; and
an executing unit that executes a process in response to a result of a comparison of a first position and a second position, the first position being a position identified by the instruction received by the receiving unit when the images are displayed in the display area by the displaying unit, the second position being a position having a coordinate shown by the coordinate information included in the images received by the communicating unit.

2. The communication terminal according to Claim 1, wherein
the server device identifies the communication terminal or a user of the communication terminal, and
the communicating unit receives the additional information whose content depends on the communication terminal or the user.

3. The communication terminal according to Claim 1 or 2, wherein
the additional information includes process information corresponding to a process executed by the executing unit, and
the executing unit executes the process based on the process information.

4. The communication terminal according to any one of Claims 1 to 3, further comprising
a superimposing unit that superimposes an image corresponding to the additional information received by the receiving unit on the image carried by the airwave received by the receiving unit, wherein
the displaying unit displays the combined image generated by the superimposing unit.

5. The communication terminal according to any one of Claims 1 to 4, further comprising
a recording unit that records, when the receiving unit receives the instruction to identify the position, the identified position and time when the instruction is received, wherein
the executing unit compares, with reference to the position and the time recorded by the recording unit, the position and a position shown by the coordinate information.

6. The communication terminal according to one of Claims 1 to 5, wherein
the communicating unit transmits feedback information corresponding to the position identified by the instruction received by the receiving unit, and receives the additional information reflecting the feedback information transmitted by a plurality of communication terminals, including the communication terminal.

7. An image displaying system comprising:
the communication terminal according to any one of Claims 1 to 6; and
a server device that transmits at least the additional information.

8. A processing method comprising:
receiving an airwave carrying images;
receiving additional information from a server device via a communication network, the additional information being information added to the images carried by the received airwave and including coordinate information showing a coordinate of a position within the images, the coordinate information corresponding to a time, the time relating to the images;
displaying on a display area the image carried by the received airwave;
receiving an input of an instruction identifying a position within the display area by a user; and
executing a process in response to a result of a comparison of a first position and a second position, the first position being a position identified by the received instruction when the images are displayed in the display area, the second position being a position having a coordinate shown by the received coordinate information.

9. A program causing a computer to execute a process, the process comprising:
receiving an airwave carrying images;
receiving additional information from a server device via a communication network, the additional information being information added to the images carried by the received airwave and including coordinate information showing a coordinate of a position within the images, the coordinate information corresponding to a time, the time relating to the images;
displaying on a display area the image carried by the received airwave;
receiving an input by a user of an instruction identifying a position within the display area; and
executing a process in response to a result of a comparison of a first position and a second position, the first position being a position identified by the received instruction when the images are displayed in the display area, the second position being a position having a coordinate shown by the received coordinate information.
